# EUROPÄISCHE PATENTSCHRIFT

(11) **EP 1 198 696 B1**
(45) Veröffentlichungstag und Bekanntmachung des Hinweises auf die Patenterteilung: **27.08.2003**
(21) Anmeldenummer: 00954304.2
(22) Anmeldetag: 30.06.2000
(51) Int. Cl.: G01C 21/26, G08G 1/01

(54) **VERFAHREN UND VORRICHTUNG ZUR ÜBERMITTLUNG VON NAVIGATIONS-INFORMATIONEN VON EINER DATENZENTRALE AN EIN FAHRZEUG-BASIERTES NAVIGATIONSSYSTEM**
METHOD AND DEVICE FOR TRANSMITTING NAVIGATIONAL INFORMATION FROM A CENTRAL DATA UNIT TO A NAVIGATION SYSTEM, LOCATED IN A MOTOR-VEHICLE
PROCEDE ET DISPOSITIF POUR LA TRANSMISSION D'INFORMATIONS DE NAVIGATION D'UNE CENTRALE DE DONNEES A UN SYSTEME DE NAVIGATION MONTE DANS UN VEHICULE

(30) Priorität: 03.07.1999 DE 19930796
(43) Veröffentlichungstag der Anmeldung: 24.04.2002
(73) Patentinhaber: ROBERT BOSCH GMBH, 70442 Stuttgart (DE)
(72) Erfinder: PETZOLD, Bernd, D-31515 Wunstorf (DE); HAHLWEG, Cornelius, D-31139 Hildesheim (DE); DRAEGER, Gerd, D-38102 Braunschweig (DE); KERSKEN, Ulrich, D-31199 Diekholzen (DE)
(86) Internationale Anmeldenummer: DE0002140
(87) Internationale Veröffentlichungsnummer: WO01002806

(56) Entgegenhaltungen:
- EP-A- 0 756 153
- EP-A- 0 921 509
- WO-A-96/00373
- DE-A- 19 651 143

## Beschreibung

### STAND DER TECHNIK

Die vorliegende Erfindung betrifft ein Verfahren und eine Vorrichtung zur Übermittlung von Navigationsinformationen von einer Datenzentrale an ein fahrzeugbasiertes Navigationssystem.

Obwohl auf beliebige Navigationssysteme anwendbar, werden die vorliegende Erfindung sowie die ihr zugrundeliegende Problematik in bezug auf ein an Bord eines Automobils befindliches Navigationssystem erläutert.

Die heutigen Navigationssysteme bestehen im wesentlichen aus folgenden Subsystemen: digitale Straßenkarte, Rechenmodul zur Fahrtroutenberechnung, Positionsbestimmungseinrichtung, Systemverwaltung, Fahrzeugsensorik zur Erkennung von Fahrzeugbewegungen, Eingabeeinheit und Ausgabeeinheit für die Bedienung und Zielführung.

Die digitale Straßenkarte wird üblicherweise auf Massenspeichermedien, in der Regel CD-ROM's, im Navigationssystem mitgeführt. Die digitale Straßenkarte kann Straßennetze mit unterschiedlicher Bedeckung (z.B. nur Deutschland) oder auch unterschiedlicher Detaillierung (z.B. Fernstraßennetz und Stadtstraßennetz bestimmter Regionen) enthalten. Daneben werden auch Zusatzinformationen zum Straßennetz wie beispielsweise Hotel- oder Restaurantinformationen für Reiseführer etc. auf dem Speichermedium abgelegt.

Aufgrund der häufigen Änderungen im Straßennetz oder der Zusatzinformationen bzw. der detaillierteren Erfassung des Kartenherstellers oder der Zusatzinformationen, kann und muß der Anwender mit sogenannten Updates seine digitale Karte ständig aktualisieren, um auf dem neuesten Stand zu sein.

Mit der Aktualisierung wird üblicherweise das komplette Speichermedium ausgetauscht, so daß umfangreiche Datenbestände auf dem Speichermedium in der Regel auch zu einer hohen Änderungsrate und damit zu erhöhten Folgekosten für den Anwender führen. Dabei werden unter Umständen auch Datenbestände aktualisiert, die vom Anwender selten oder nie genutzt werden aber dennoch anteilig mit bezahlt werden müssen. Dies ist aufwendig und kostspielig.

Die EP 0 814 448 A2 beschreibt ein Verfahren für eine zentralengestützte dynamische Routenempfehlung. Das Endgerät folgt dabei trotz autarker Datenbasis einer von der Zentrale vorgegebenen Route.

WO-A-96 00 373 beschreibt ein Verfahren und eine Vorrichtung zum Übermitteln von Navigationsinformationen von einer Datenbank an ein fahrzeugbasiertes Navigationssystem. Dabei übermittelt das Navigationssystem über eine Luftschnittstelle ein individuelles Anforderungsprofil an die Datenzentrale, wo dieses entsprechend bearbeitet wird und von wo die entsprechenden Navigationsinformationen an das fahrzeugbasierte Navigationssystem über die Luftschnittstelle zurückübermittelt werden.

### VORTEILE DER ERFINDUNG

Das erfindungsgemäße Verfahren mit den Merkmalen des Anspruchs 1 und die entsprechende Vorrichtung gemäß Anspruch 6 weisen gegenüber den bekannten Lösungsansätzen den Vorteil auf, daß Speicher(z.B. CD-)-Updates des gesamten Datenbestandes reduziert werden können. Aktuelle Daten können bei Bedarf angefordert und übermittelt werden. Der Nutzer kann sich seine eigene individuelle Navigationsdatenbasis definieren und mit der oder den Datenzentralen individuelle Aktualisierungszyklen und - umfänge vereinbaren. Durch einen Verbund von Datenzentralen, die über verschiedene Informationsinhalte verfügen, können dem Nutzer hochaktuelle Kartenäusschnitte mit Zusatzinformationen angeboten werden, die sich regional unterscheiden können (z.B. durch regionale Datenzentralen, die regionale Hotelführer, Parkdienste, allg. Städteinfos, Sperrungen, Baustellen etc.). Durch die Kopplung von Verkehrsmanagementsystemen mit den Datenzentralen kann eine Verkehrsbeeinflussung erfolgen, indem die Kartenausschnitte mit Attributen für Fahrtempfehlungen oder zu vermeidenden Verkehrsnetzbereichen versehen werden oder bestimmte Verkehrsnetzbereiche nicht übertragen werden.

Die der vorliegenden Erfindung zugrundeliegende Idee besteht darin, daß immer nur der benötigte, d.h. durch ein individuelles Anforderungsprofil definierte Datenbestand automatisch über eine Luftschnittstelle (z.B. GSM, DAB o.ä.) aktualisiert wird.

Die automatische Datenübertragung soll z.B. im Fall der Kartenübertragung dem Navigationssystem anhand des individuellen Anforderungsprofils (z.B. in Abhängigkeit vom Fahrtziel und der geplanten Fahrtroute usw.) mindestens den Kartenausschnitt mit den jeweils individuell vom Anwender oder Navigationssystem gewünschten oder minimal benötigten Karteninhalten und Zusatzinformationen über die Luftschnittstelle automatisch zur Verfügung stellen.

Die Bereitstellung erfolgt über die sogenannte Datenzentrale, in der die Karteninhalte und Zusatzinformationen mit jeweils höchster Aktualität bereitgehalten werden.

Zusätzlich können z.B. nach der Übertragung eines individuellen Kartenausschnitts für diesen Kartenausschnitt innerhalb eines bestimmten Zeitraums aktualisierte Zusatzinformationen übertragen werden.

Das Anforderungsprofil wird mit Hilfe eines bidirektionalen Kommunikationssystems (z.B. GSM, DAB+GSM, UMTS) als Anfrage an eine Datenzentrale gesandt. In der Datenzentrale wird, anhand des Anforderungsprofils der eingehenden Anfrage, aus der Gesamtdatenbasis ein entsprechender Ausschnitt aus den Navigationsinformationen, z.B. der digitalen Karte, entnommen.

Der Kartenausschnitt und dynamische Zusatzinformationen werden so aufbereitet, daß sie in der Empfängerdatenbasis des Navigationssystems ohne Konvertierung zur dynamisierten Routensuche, zur Zielführung und zur Darstellung verwendet werden können. Hierzu wird ein von dem Navigationssystem gewünschtes Datenformat an die Datenzentrale übermittelt. Somit können verschiedene Navigationssysteme, die mit verschiedenen Datenformaten betrieben werden, auf die gleiche Datenzentrale zugreifen. Außerdem können Informationen durch ein Navigationssystem von verschiedenen Datenzentralen abgerufen werden, die ebenfalls mit verschiedenen Datenformaten betreiben werden. Alternativ dazu kann z.B. eine Aufbereitung in ein allgemeingültiges Datenformat für digitale Karten und Zusatzinformationen zu diesen Karten erfolgen, das im Empfänger noch konvertiert werden muß, um zur dynamisierten Routensuche, Zielführung und Darstellung verwendet werden zu können.

Das fahrzeugbasierte Navigationssystem bleibt dabei möglichst eigenständig und ruft sich nur bedarfsweise selbstständig die jeweils benötigten Daten von einer Zentrale. Die Daten verbleiben im Navigationssystem, d.h. werden dort gespeichert, und können mehrfach für unterschiedliche Ziele genutzt werden.

Die Routenberechnung erfolgt vorzugsweise im Fahrzeug und nicht in der Datenzentrale. Die Datenzentrale stellt lediglich eine Datenbank für Straßendaten, aktuelle Verkehrsdaten, reiserelevante Zusatzinformationen zu Kartenelementen (z.B. Parkbelegungszahlen zu Parkhäusern, detaillierte Informationen zu Points of Interest incl. Anfahrtsbeschreibung, gebietsbezogen Informationen, ...) dar. Die Datenzentrale filtert anhand einer Anfrage mit bestimmten Abfrageparametern lediglich die benötigten Daten aus der Datenbank und stellt sie dem Navigationssystem zur Verfügung. Das Anforderungsprofil bzw. die Anfrage (auch zeitlich) wird vom fahrzeugbasierten Navigationssystem bestimmt. Die Zentrale wird zweckmäßigerweise vom Fahrzeug aktiviert und kennt daher nicht die aktuelle Position des Fahrzeugs. Die Vorrichtung ermöglicht insbesondere ein nutzerspezifisches Update. Die Vorrichtung kann auch (gleichzeitig) mit mehreren verschiedene Datenzentralen Kontakt aufnehmen (z.B. über einen mobilen Internet-Zugang) und die von den Zentralen bereitgestellten Daten im Fahrzeug für die fahrzeugbasierte Routenberechnung auswerten. Die übermittelten Daten können auch intermodale Teilrouten (z.B. bei P+R die Reiseroute im Öffentlichen Verkehr) enthalten, die im Fahrzeug mit bewertet werden können.

In den abhängigen Ansprüchen finden sich vorteilhafte Weiterbildungen und Verbesserungen des jeweiligen Gegenstandes der Erfindung.

Gemäß einer bevorzugten Weiterbildung weist das Navigationssystem eine Speichereinrichtung zum Speichern eine Navigationsinformations-Datenbank auf. Die rückübermittelten Navigationsinformationen werden in der Speichereinrichtung anstelle entsprechender bereits in der Navigationsinformations-Datenbank gespeicherter Navigationsinformationen zum Zwecke der Aktualisierung und/oder Ergänzung gespeichert.

Gemäß einer weiteren bevorzugten Weiterbildung werden in der Datenzentrale Karteninhalte und Zusatzinformationen mit jeweils vorzugsweise höchster Aktualität als Navigationsinformationen bereitgehalten.

Gemäß einer weiteren bevorzugten Weiterbildung weist das individuelle Anforderungsprofil mindestens eines der folgenden Merkmale auf:
das Fahrerverhalten, insbesondere durchschnittliche Geschwindigkeit oder dergleichen;
die aktuelle Verkehrssituation;
die aktuelle Position;
das Fahrtziel;
die geplante Fahrtroute;
die Optimierungskriterien für die Routensuche;
Ausschluß bestimmter Straßenklassen oder Zusatzinformationen;
gewünschte Zusatzinformationen;
gewünschte Aktualisierungsrate bei zeitveränderlichen Zusatzinformationen;
Datenformat der im Navigationssystem verwendeten Datenbasis;
geographische Gebietsbeschreibung des gewünschten Kartenausschnitts; und
in dem gewünschten Kartenausschnitt enthaltene, den Kartenausschnitt teilweise begrenzende oder umschließende Strecken.

Gemäß einer weiteren bevorzugten Weiterbildung wird eine Kommunikation mit mehreren Datenzentralen geführt.

### ZEICHNUNGEN

Ausführungsbeispiele der Erfindung sind in den Zeichnungen dargestellt und in der nachfolgenden Beschreibung näher erläutert.

Es zeigen:
Fig. 1 ein Gesamtsystem zur Übertragung von Navigationsinformationen gemäß einer Ausführungsform der Erfindung;
Fig. 2 eine Datenzentrale gemäß der Ausführungsform nach Fig. 1;
Fig. 3 ein fahrzeugbasiertes Navigationssystem'gemäß der Ausführungsform nach Fig. 1;
Fig. 4 ein Navigationssystem mit einem ausgelagerten ortsfesten Teilsystem gemäß der Ausführungsform nach Fig. 1;
Fig. 5 eine Navigationsinformations-Übertragungs-einrichtung gemäß der Ausführungsform nach Fig. 1;
Fig. 6 ein Bespiel für eine Situation vor einer Navigationsinformations-Übertragung; und
Fig. 7ein Bespiel für eine Situation nach einer Navigationsinformations-Übertragung.

### BESCHREIBUNG DER AUSFÜHRUNGSBEISPIELE

In den Figuren bezeichnen gleiche Bezugszeichen gleiche oder funktionsgleiche Komponenten.

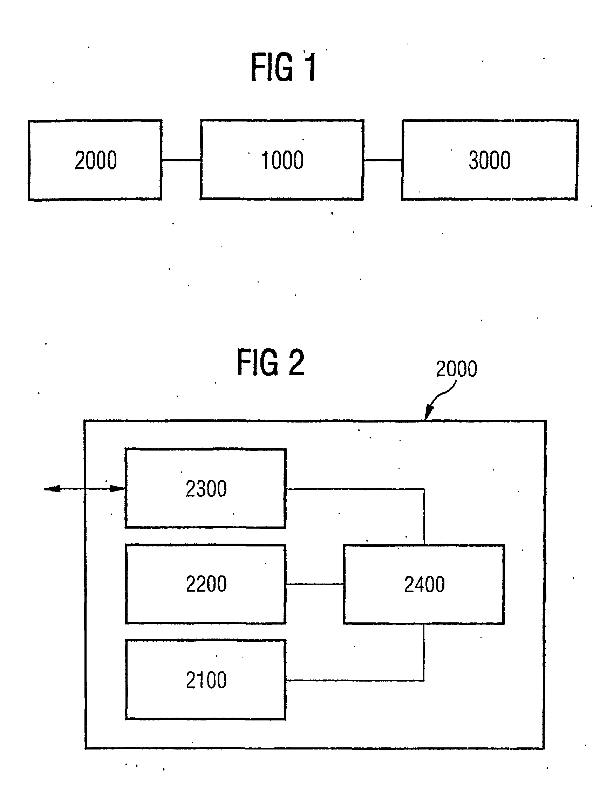

Fig. 1 zeigt ein Gesamtsystem zur Übertragung von Navigationsinformationen gemäß einer Ausführungsform der Erfindung.

Das Gesamtsystem zur Navigationsinformationsübertragung, insbesondere Kartenübertragung und Zusatzinformationsübertragung, besteht aus einer (oder mehreren) Datenzentrale(n) 2000, einem Kommunikationssystem 1000 und einem fahrzeugbasierten Navigationssystem 3000 für die Übertragungssteuerung, Aufbereitung und Nutzung von Kartenausschnitten.

Fig. 2 zeigt eine Datenzentrale gemäß der Ausführungsform nach Fig. 1.

Die Datenzentrale 2000 umfaßt bei diesem Beispiel eine Datenbank 2100 für Verkehrsnetze bzw. digitale Karten und eine Datenbank 2200 für Zusatzinformationen, die jeweils statische und dynamische Datenbestände enthalten können.

Die Aufbereitung der zu sendenden Navigationsinformationen erfolgt anhand des vom Navigationssystem 3000 über das Kommunikationssystem 1000 übermittelten Anforderungsprofils in der Aufbereitungseinrichtung 2400, nämlich hier zu einem Kartenausschnitt mit den vom Nutzer gewünschten Karteninhalten.

Die Datenzentrale 2000 hat zusätzlich die Möglichkeit, über die Kommunikationsschnittstelle 2300 mit weiteren Datenzentralen zu kommunizieren, um die vom Navigationssystem 3000 gewünschten und ggfs. in den Datenbanken 2100 und 2200 nicht enthaltenen oder nicht aktuellen Informationen bereitzustellen zu können.

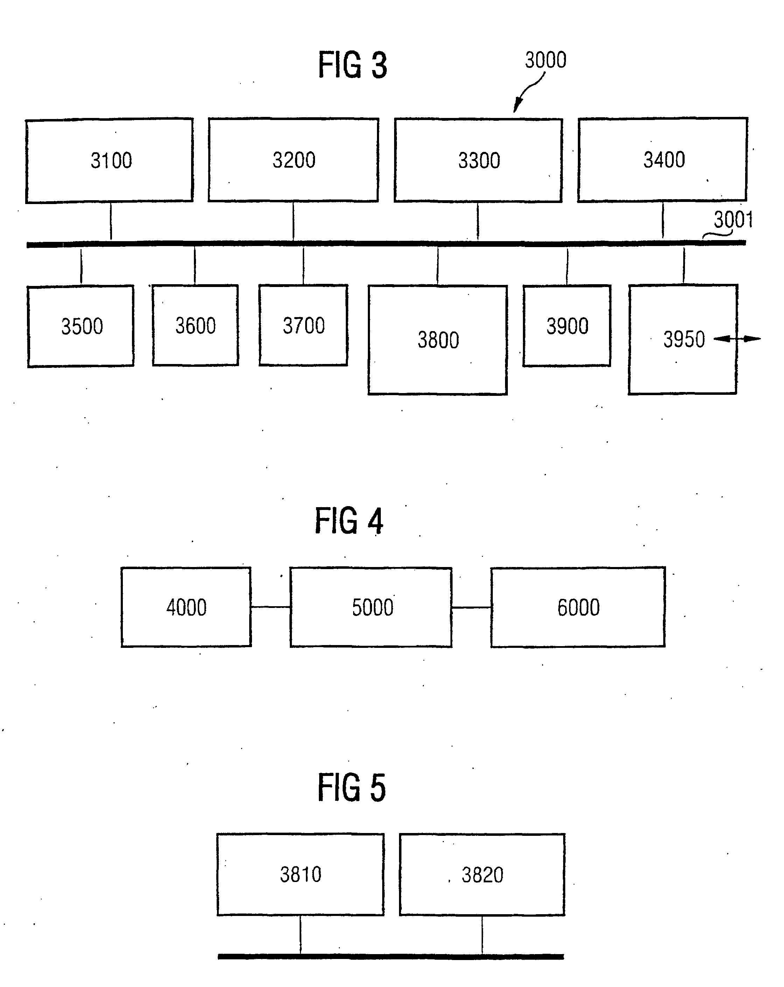

Fig. 3 zeigt ein fahrzeugbasiertes Navigationssystem 3000 gemäß der Ausführungsform nach Fig. 1. Dabei bezeichnen 3001 einen Bus, 3100 eine Datenbank für digitale Karten, 3200 eine Systemverwaltungseinrichtung, 3300 eine Positionsbestimmungseinrichtung, 3400 eine Fahrtrouten-Festlegungseinrichtung, 3500 eine Fahrzeugsensorik, 3600 eine Eingabeeinheit, 3700 eine Ausgabeeinheit, 3800 eine Kartenübertragungseinrichtung, 3900 eine Zielführungseinrichtung und 3950 ein Kommunikationsschnittstelle.

Fig. 4 zeigt ein Navigationssystem mit einem ausgelagerten ortsfesten Teilsystem gemäß der Ausführungsform nach Fig. 1.

In Figur 4 wird ein zu Figur 3 funktionsgleiches Navigationssystem beschrieben, bei dem mindestens eine der Teileinheiten gemäß Figur 3 im ortsfesten Teilsystem 6000 angeordnet ist und die erforderliche Kommunikation mit den in dem mobilen Teilsystem 4000, d.h. mit den im Fahrzeug angeordneten Teileinheiten, gemäß Figur 4 über das Kommunikationssytem 5000 erfolgt. Die Kommunikationssysteme 1000 aus Figur 1 bzw. Figur 2 und 5000 aus Figur 4 können identisch sein.

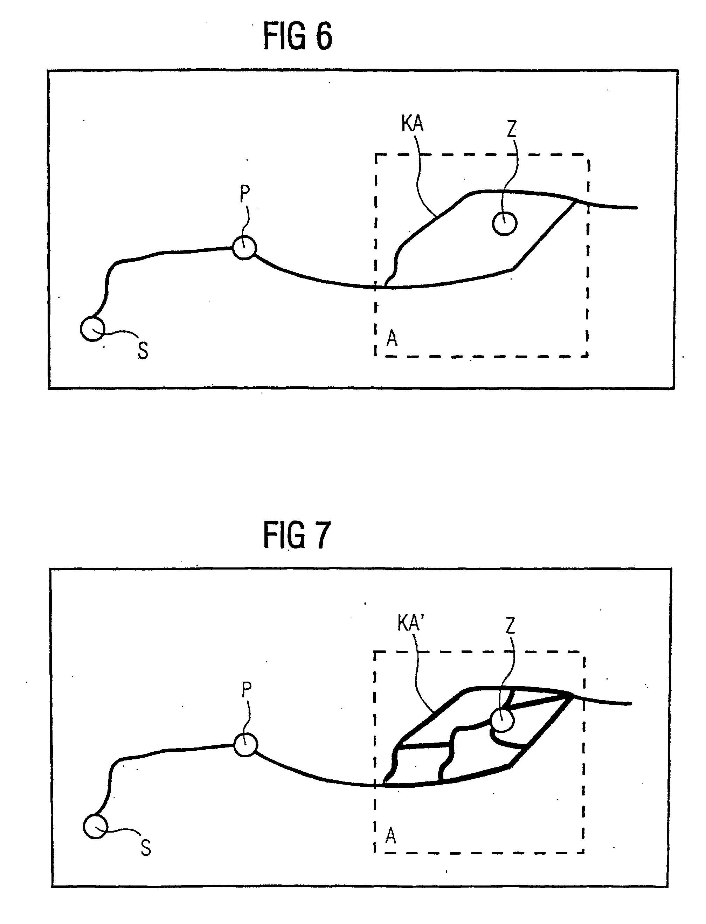

Fig. 5 zeigt eine Navigationsinformations-Übertragungseinrichtung gemäß der Ausführungsform nach Fig. 1.

Die Navigationsinformations-Übertragungseinrichtung 3800 besteht gemäß Figur 5 aus den Teileinheiten 3810 zur Erzeugung eines nutzerspezifischen bzw. bedarfsgerechten Anforderungsprofils und der Teileinheit 3820 zur Einbindung der empfangenen Navigationsinformation, hier z.B.des Kartenausschnitts, in die digitale Karte 3100 im Navigationssystem 3000.

Zur Erläuterung eines Ausführungsbeispiels des Verfahrensablaufes zeigt Fig. 6 ein Bespiel für eine Situation vor einer Navigationsinformations-Übertragung und Fig. 7 ein Bespiel für eine Situation nach einer Navigationsinformations-Übertragung.

Ein Nutzer, dessen Fahrzeug mit einem Navigationsystem 3000 gemäß Figur 2 ausgestattet ist, unternimmt gemäß Figur 6 eine Reise vom Startort S zum Zielort Z und befindet sich an der aktuellen Position P.

Der Zielort Z liegt in der Stadt A, die Navigationsdatenbasis 3100 im Navigationssystem 3000 enthält jedoch im Zielgebiet nur das überregionale Straßennetz und den Ortsmittelpunkt der Stadt A.

Das Navigationssystem 3000 hat bereits bei der Zieleingabe erkannt, daß sich das Fahrtziel Z in einem in der Navigationsdatenbasis 3100 nicht digitalisiertem Gebiet befindet und daher eine Zielführung mit Abbiegehinweisen im Zielgebiet nicht möglich ist.

Das Navigationssystem 3000 erzeugt daher mit der Einheit 3810 gemäß vorbestimmten Parametern, wie z.B. Fahrerverhalten (z.B. durchschnittliche Geschwindigkeit), aktuellen Verkehrssituation, aktuelle Position, Fahrtziel, geplante Fahrtroute (z.B. entlang bestimmter Points of Interest), Optimierungskriterien für die Routensuche (z.B. schnellste, kürzeste Route), Ausschluß bestimmter Straßenklassen oder Zusatzinformationen, gewünschte Zusatzinformationen (z.B. reisebegleitende Inrormationen, Point of Interests, ...), gewünschte Aktualisierungsrate bei zeitveränderlichen Zusatzinformationen, Datenformat der im Navigationssystem verwendeten Datenbasis, geographische Gebietsbeschreibung des gewünschten Kartenausschnitts (z.B. über parametrisierbare Geometrien wie Polygone, Kreise, etc.) und
in dem gewünschten Kartenausschnitt enthaltene, den Kartenausschnitt teilweise begrenzende oder umschließende Strecken (z.B. bestimmte Straßen) ein Anforderungsprofil für einen bedarfsgerechten Kartenausschnitt.

Das Anforderungsprofil definiert in diesem Fall ein Teilnetz der Stadt A mit der aktuellen Verkehrsituation sowie den in der Nähe des Ziels Z gelegenen Parkhäusern. Weiterhin wird definiert, daß in bestimmten Zyklen, die durch die Distanz zum Fahrtziel bestimmt werden, die dynamischen Datenbestände im Kartenausschnitt aktualisert werden. Das Anforderungsprofil wird über das Kommunikationssystem 1000 (z.B. GSM) an die Datenzentrale 2000 (Service Provider) gesandt.

Die Datenzentrale 2000 erzeugt anhand des Anforderungsprofils mit der Aufbereitungseinrichtung 2400 einen Kartenausschnitt gemäß Figur 7 mit der aktuellen Verkehrslage, den Parkhäusern mit aktuellen Belegungsdaten in der Nähe des Ziels Z sowie Prognosedaten zur Verkehrslage im Zielgebiet und den Belegungsdaten für den geschätzten Ankunftszeitraum des Nutzers am Zielort Z. Die Daten werden in das vom Navigationssystem 3000 gewünschte Datenformat konvertiert und dorthin mit dem Kommunikationssystem 1000 übermittelt.

Im Kommunikationssystem konvertiert die Navigationsinformations-Einbindungseinrichtung 3820 die empfangenen Daten und bindet diese in die Navigationsdatenbasis bzw. digitale Karte 3100 gemäß Figur 7 ein.

Anschließend erfolgt mit den Einrichtungen 3200 bis 3500 eine Neuberechnung der Fahrtroute auf der aktualisierten digitalen Karte 3100. Im Rahmen des im Anforderungsprofil angegebenen Zyklus sendet die Datenzentrale 2000 auf den Kartenausschnitt bezogenen aktualisierte Daten an den Empfänger 3000.

Alternativ kann das Navigationssystem 3000 mit der Anforderungsprofil-Erzeugungseinrichtung 3810 auch zyklisch aktualisierte Daten von der Datenzentrale 2000 anfordern, die von Datenzentrale bei der Erstaussendung des betreffenden Kartenauschnitts als "zeitlich veränderlich" gekennzeichnet worden sind.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Als Navigationsdatenbasis 3100 für die Digitale Karte und die Zusatzinformationen kann beispielsweise eine CD-ROM eines Autobahn- und Bundesstraßennetzes verwendet. Es ist aber auch jedes andere, vorzugsweise überschreibbare, Massenspeichermedium verwendbar.

## Patentansprüche

1. Verfahren zur Übermittlung von Navigationsinformationen von einer Datenzentrale an ein fahrzeugbasiertes Navigationssystem mit den Schritten:
Übermitteln eines individuellen Anforderungsprofils von dem Navigationssystem an die Datenzentrale über eine Luftschnittstelle;
Analysieren des übermittelten individuellen Anforderungsprofils in der Datenzentrale; und. Rückübermitteln von Navigationsinformationen von der Datenzentrale an das fahrzeugbasierte Navigationssystem über die Luftschnittstelle unter Berücksichtigung des Analyseergebnisses, **dadurch gekennzeichnet, dass** das Datenformat einer im Navigationssystem verwendeten Datenbasis übertragen wird und Navigationsinformationen von der Datenzentrale an das fahrzeugbasierte Navigationssystem in diesem Datenformat übertragen werden.

2. Verfahren nach Anspruch 1, **dadurch gekennzeichnet, dass** das Navigationssystem eine Speichereinrichtung zum Speichern einer Navigationsinformations-Datenbank aufweist, und dass die rückübermittelten Navigationsinformationen in der Speichereinrichtung anstelle entsprechender bereits in der Navigationsinformations-Datenbank gespeicherter Navigationsinformationen zum Zwecke der Aktualisierung und/oder Ergänzung gespeichert werden.

3. Verfahren nach einem der vorhergehenden Ansprüche, **dadurch gekennzeichnet, daß** in der Datenzentrale Karteninhalte und Zusatzinformationen mit jeweils vorzugsweise höchster Aktualität als Navigationsinformationen bereitgehalten werden.

4. Verfahren nach einem der vorhergehenden Ansprüche, **dadurch gekennzeichnet, daß** das individuelle Anforderungsprofil mindestens eines der folgenden Merkmale aufweist:
das Fahrerverhalten, insbesondere durchschnittliche Geschwindigkeit oder dergleichen;
die aktuelle Verkehrssituation;
die aktuelle Position;
das Fahrtziel;
die geplante Fahrtroute;
die Optimierungskriterien für die Routensuche;
Ausschluß bestimmter Straßenklassen oder Zusatzinfonnationen;
gewünschte Zusatzinformationen;
gewünschte Aktualisierungsrate bei zeitveränderlichen Zusatzinformationen;
Datenformat der im Navigationssystem verwendeten Datenbasis; geographische Gebietsbeschreibung des gewünschten Kartenausschnitts; und
in dem gewünschten Kartenausschnitt enthaltene, den Kartenausschnitt teilweise begrenzende oder umschließende Strecken.

5. Verfahren nach einem der vorhergehenden Ansprüche, **dadurch gekennzeichnet, daß** eine Kommunikation mit mehreren Datenzentralen geführt wird.

6. Vorrichtung zur Übermittlung von Navigationsinformationen von einer Datenzentrale (2000) an ein fahrzeugbasiertes Navigationssystem (3000) mit:
einer Anforderungsprofil-Erzeugungseinrichtung (3810) zum Erzeugen eines individuellen Anforderungsprofils entsprechend der im fahrzeugbasierten Navigationssystem (3000) benötigten Navigationsinformationen;
einer Kommunikationseinrichtung (1000) zum Übermitteln des individuellen Anforderungsprofils von dem Navigationssystem (3000) an die Datenzentrale (2000) über eine Luftschnittstelle;
einer in der Datenzentrale vorgesehenen Aufbereitungseinrichtung zum Analysieren des übermittelten individuellen Anforderungsprofils und Bereitstellen der in dem fahrzeugbasierten Navigationssystem (3000) benötigten Navigationsinformationen und Rückübermitteln von den benötigten Navigationsinformationen von der Datenzentrale (2000) an das fahrzeugbasierte Navigationssystem (3000) über die Luftschnittstelle; und
einer Navigationsinformations-Einbindungseinrichtung zum Einbinden der rückübermittelten, benötigten Navigationsinformationen in das fahrzeugbasierte Navigationssystem (3000) **dadurch gekennzeichnet, dass** Mittel vorgesehen sind, welche das Datenformat der in dem Navigationssystem (3000) verwendeten Datenbasis an die Datenzentrale übertragen, und dass die Navigationsinformationen von der Aufbereitungseinrichtung in
das Datenformat der im Navigationssystem (3000) verwendeten Datenbasis konvertiert und in diesem Datenformat an das Navigationssystem (3000) übertragen werden.

7. Vorrichtung nach Anspruch 6, **dadurch gekennzeichnet, daß** das fahrzeugbasierte Navigationssystem (3000) ein überschreibbares Massenspeichermedium (3100) zum Speichern der Navigationsinformationen aufweist.

8. Vorrichtung nach einem der Ansprüche 6-7, **dadurch gekennzeichnet, daß** in der Datenzentrale (2000) Karteninhalte und Zusatzinformationen als Navigationsinformationen in einer jeweiligen Datenbank (2100, 2200) abrufbar sind.

9. Vorrichtung nach einem der Ansprüche 6-8, **dadurch gekennzeichnet, daß** das individuelle Anforderungsprofil mindestens eines der folgenden Merkmale aufweist:
das Fahrerverhalten, insbesondere durchschnittliche Geschwindigkeit oder dergleichen;
die aktuelle Verkehrssituation;
die aktuelle Position;
das Fahrtziel;
die geplante Fahrtroute;
die Optimierungskriterien für die Routensuche;
Ausschluß bestimmter Straßenklassen oder Zusatzinformationen;
gewünschte Zusatzinformationen;
gewünschte Aktualisierungsrate bei zeitveränderlichen Zusatzinformationen;
Datenformat der im Navigationssystem verwendeten Datenbasis; geographische Gebietsbeschreibung des gewünschten Kartenausschnitts; und in dem gewünschten Kartenausschnitt enthaltene, den Kartenausschnitt teilweise begrenzende oder umschließende Strecken.

## Claims

1. Method for transmitting navigation information items from a central data unit to a navigation system located in a vehicle, having the steps:
an individual request profile is transmitted from the navigation system to the central data unit via an air interface;
the transmitted individual request profile in the central data unit is analysed; and
navigation information items are transmitted back from the central data unit to the navigation system located in a vehicle, via the air interface taking into account the analysis result, **characterized in that** the data format of a database which is used in the navigation system is transmitted and navigation information items are transmitted from the central data unit to the navigation system located in a vehicle in this data format.

2. Method according to Claim 1, **characterized in that** the navigation system has a storage device for storing a navigation information database, and **in that** the transmitted-back navigation information items are stored in the storage device instead of corresponding navigation information items already stored in the navigation information database, for the purpose of updating and/or supplementing.

3. Method according to one of the preceding claims, **characterized in that** map contents and supplementary information items, each preferably with the maximum degree of up-to-dateness, are made available as navigation information items in the central data unit.

4. Method according to one of the preceding claims, **characterized in that** the individual request profile has at least one of the following features:
the driver's behaviour, in particular average speed or the like;
the current traffic situation;
the current position;
the driving destination;
the planned route;
the optimization criteria for the searching of the route;
exclusion of specific road classes or supplementary information items;
desired supplementary information items;
desired updating rate for supplementary information items which change over time;
data format of the database used in the navigation system;
geographic region description of the desired portion of a map;
routes which are contained in the desired portion of a map and which partially delimit or enclose the portion of a map.

5. Method according to one of the preceding claims, **characterized in that** communication is carried out with a plurality of central data units.

6. Device for transmitting navigation information items from a central data unit (2000) to a navigation system (3000) located in a vehicle, having:
a request-profile generating device (3810) for generating an individual request profile in accordance with the navigation information items required in the navigation system (3000) located in a vehicle;
a communication device (1000) for transmitting the individual request profile from the navigation system (3000) to the central data unit (2000) via an air interface;
a conditioning device, provided in the central data unit, for analysing the transmitted individual request profile and making available the navigation information items required in the navigation system (3000) located in a vehicle, and transmitting back the required navigation information items from the central data unit (2000) to the navigation system (3000) located in a vehicle via the air interface; and
a navigation-information feed device for feeding the required, transmitted-back navigation information items into the navigation system (3000) located in a vehicle, **characterized in that** means are provided which transmit the data format of the database used in the navigation system (3000) to the central data unit, and **in that** the navigation information items are converted by the conditioning device into the data format of the database used in the navigation system (3000) and are transmitted in this data format to the navigation system (3000).

7. Device according to Claim 6, **characterized in that** the navigation system (3000) located in a vehicle has a mass storage medium (3100) which can be overwritten, for storing the navigation information items.

8. Device according to one of Claims 6 to 7, **characterized in that** map contents and supplementary information items can be called as navigation information items in a respective database (2100, 2200) in the central data unit (2000).

9. Device according to one of Claims 6 to 8, **characterized in that** the individual request profile has at least one of the following features:
the driver's behaviour, in particular average speed or the like;
the current traffic situation;
the current position;
the driving destination;
the planned route;
the optimization criteria for the searching of the route;
exclusion of specific road classes or supplementary information items;
desired supplementary information items;
desired updating rate for supplementary information items which change over time;
data format of the database used in the navigation system;
geographic region description of the desired portion of a map; and routes which are contained in the desired portion of a map and which partially delimit or enclose the portion of a map.

## Revendications

1. Procédé de transmission d'informations de navigation d'une centrale de données vers un système de navigation embarqué dans un véhicule et comprenant les étapes suivantes :
- transmission d'un profil individuel de requête par le système de navigation à la centrale de données par une interface aérienne,
- analyse du profil de requête individuel transmis à la centrale de données et transmission en retour des informations de navigation de la centrale de données vers le système de navigation embarqué dans le véhicule par la ligne aérienne en tenant compte des résultats de l'analyse,
**caractérisé en ce qu'**
- on transmet le format de données de la base de données utilisé dans le système de navigation, et
- on transmet les informations de navigation de la centrale de données au système de navigation embarqué dans le véhicule suivant ce format de données.

2. Procédé selon la revendication 1,
**caractérisé en ce que**
le système de navigation comporte une installation de mémoire pour enregistrer une banque de données d'informations de navigation, et
des informations de navigation transmises sont enregistrées dans l'installation de mémoire à la place des informations de navigation déjà enregistrées dans la banque de données d'informations de navigation pour assurer l'actualisation et/ou des informations complémentaires.

3. Procédé selon l'une quelconque des revendications précédentes,
**caractérisé en ce que**
la centrale de données comporte des contenus de cartes et des informations complémentaires avec des informations de navigation de préférence avec la dernière mise à jour.

4. Procédé selon l'une quelconque des revendications précédentes,
**caractérisé en ce que**
le profil de requête individuel comporte au moins l'une des caractéristiques suivantes :
- le comportement du conducteur notamment la vitesse moyenne ou analogue,
- l'état actuel de la circulation routière actuelle,
- la position actuelle,
- la destination,
- le trajet prévu,
- les critères d'optimisation pour la recherche du trajet,
- l'exclusion de certaines catégories de routes ou d'informations complémentaires,
- des informations complémentaires voulues,
- un taux d'actualisation souhaité pour des informations supplémentaires variables dans le temps,
- un format de données pour la base de données utilisée dans le système de navigation,
- une description géographique de la zone correspondant de l'extrait de cartes souhaité, et
- des trajets contenus dans l'extrait de cartes routières souhaité et qui en partie délimite ou entourent cet extrait de cartes routières.

5. Procédé selon l'une quelconque des revendications précédentes,
**caractérisé en ce qu'**
on effectue une communication avec plusieurs centrales de données.

6. Dispositif de transmission d'informations de navigation à partir d'une centrale de données (2000) vers un système de navigation (3000) intégré dans un véhicule comprenant :
- une installation générant un profil de requête (3810) pour générer un profil de requête individuel en fonction des informations de navigation nécessaires au système de navigation (3000) intégré dans le véhicule,
- une installation de communication (1000) pour transmettre le profil de requête individuel du système de navigation (3000) à la centrale de données (2000) par une interface aérienne,
- une installation de préparation prévue dans la centrale de données pour analyser le profil de requête individuel transmis, fournir les informations de navigation nécessaires au système de navigation (3000) intégré dans le véhicule et transmettre en retour les informations de navigation nécessaires de la centrale de données (2000) au système de navigation (3000) intégré dans le véhicule par l'interface aérienne, et
- une installation d'intégration des informations de navigation pour intégrer les informations de navigation nécessaires, transmises en retour dans le système de navigation (3000) du véhicule,
**caractérisé par**
des moyens qui transmettent le format de données de la base de données utilisée dans le système de navigation (3000) à la centrale de données, et qui
- convertissent les informations de navigation de l'installation de préparation dans le format de données de la base de données utilisée dans le système de navigation (3000), et les transmettent dans ce format de données au système de navigation (3000).

7. Dispositif selon la revendication 6,
**caractérisé en ce que**
le système de navigation (3000) du véhicule comporte un support de mémoire de masse (3100) ré-inscriptible pour enregistrer les informations de navigation.

8. Dispositif selon l'une quelconque des revendications 6 et 7,
**caractérisé en ce qu'**
on peut demander à la centrale de données (2000) des contenus de cartes et des informations supplémentaires comme informations de navigation dans une banque de données respective (2100, 2200).

9. Dispositif selon l'une quelconque des revendications 6 à 8,
**caractérisé en ce que**
le profil de requête individuel comporte au moins l'une des caractéristiques suivantes :
- le comportement du conducteur notamment la vitesse moyenne ou une information analogue,
- la situation routière actuelle,
- la position actuelle,
- la destination,
- le trajet prévu,
- les critères d'optimisation pour la recherche du trajet,
- l'exclusion de certains types de routes ou d'informations supplémentaires,
- des informations supplémentaires souhaitées,
- un taux d'actualisation souhaité pour des informations complémentaires variables dans le temps,
- un format des données de la base de données utilisée dans le système de navigation,
- la description de la zone géographique de l'extrait de cartes souhaité, et
- dans l'extrait de cartes souhaité, les trajets contenus dans cet extrait ou qui délimitent ou entourent partiellement cet extrait de cartes.
